# EUROPÄISCHE PATENTSCHRIFT

(11) **EP 3 258 224 B1**
(45) Veröffentlichungstag und Bekanntmachung des Hinweises auf die Patenterteilung: **19.05.2021**
(21) Anmeldenummer: 16174228.3
(22) Anmeldetag: 13.06.2016
(51) Int. Cl.: G01F 23/284, H01P 3/06, B25B 27/06

(54) **ABSTANDHALTER ZUM HALTEN EINES ABSTANDES ZWISCHEN EINEM STABFÖRMIGEN INNENLEITER UND EINEM AUSSENLEITER EINER FÜLLSTAND-MESSSONDE**
SPACER FOR HOLDING A DISTANCE BETWEEN A ROD-SHAPED CONDUCTOR AND AN EXTERNAL CONDUCTOR OF A FILL LEVEL MEASURING PROBE
ECARTEUR DESTINE A CONSERVER UN ECART ENTRE UN CONDUCTEUR INTERNE EN FORME DE TIGE ET UN CONDUCTEUR EXTERNE D'UNE SONDE DE MESURE DE NIVEAU DE REMPLISSAGE

(43) Veröffentlichungstag der Anmeldung: 20.12.2017
(73) Patentinhaber: VEGA Grieshaber KG, 77709 Wolfach (DE)
(72) Erfinder: DIETMEIER, Jürgen, 77756 Hausach (DE)
(74) Vertreter: Maiwald Patent- und Rechtsanwaltsgesellschaft mbH

(56) Entgegenhaltungen:
- EP-A1- 1 541 976
- DE-A1-102004 032 965
- DE-A1-102011 009 385
- US-A- 3 260 903
- US-A1- 2004 177 485
- US-A1- 2013 291 957
- US-B1- 6 380 750

## Beschreibung

### Gebiet der Erfindung

Die vorliegende Erfindung betrifft einen Abstandhalter zum Halten eines Abstandes zwischen einem stabförmigen Innenleiter und einem Außenleiter einer Füllstandmesssonde. Die Erfindung betrifft ferner einen stabförmigen Innenleiter einer Messsonde, eine Messsonde zur Ermittlung eines Füllstandes eines in einem Behälter befindlichen Mediums, sowie ein Montageverfahren zur Montage eines Abstandhalters auf einem stabförmigen Innenleiter.

### Hintergrund der Erfindung

Die Zeitbereichsreflektometrie, welche im Englischen auch bekannt ist unter dem Namen Time Domain Reflectometry (TDR), wird zur Ermittlung und Analyse von Lauflängen und Reflexionscharakteristika von elektromagnetischen Wellen und Signalen verwendet.

Bei einem auf TDR-basierenden Füllstandmessgerät wird von der Elektronik des Sensors ein elektromagnetischer Impuls erzeugt, in einen Leiter, welcher beispielsweise auch als Messsonde bezeichnet wird, eingekoppelt und entlang dieser Sonde geführt. Dabei kommen beispielsweise Koaxialmesssonden zum Einsatz, bei denen ein stabförmiger Innenleiter CGS:PSU

innerhalb eines röhrenförmigen Außenleiters angeordnet ist. Nachdem der elektromagnetische Impuls in die Messsonde eingekoppelt wurde, wird dieser nun an der Oberfläche des zu messenden Mediums reflektiert und läuft entlang der Messsonde wieder zurück zu einer Elektronik, welche dann aus der Zeitdifferenz zwischen dem ausgesandten und dem empfangenen Impuls den Füllstand berechnet.

Eine solche Messsonde kann Vibrationen bzw. äußeren Erschütterungen ausgesetzt sein, so dass dadurch Ungenauigkeiten bei der Messung entstehen können. Insbesondere kann es zu einer ungewollten Relativbewegung zwischen dem röhrenförmigen Außenleiter und den sich darin befindenden stabförmigen Innenleiter der Messsonde kommen, so dass die Qualität des Messsignals beeinträchtigt wird.

Die DE 10 2011 009 385 A1 beschreibt einen Abstandhalter zur Zentrierung eines Innenleiters in einem Außenleiter eines Koaxialleiters. Als Abstützstruktur ist ein an der Innenwand des Außenleiters anliegender Außenring vorgesehen, wobei zur Bildung einer zentrischen Öffnung wenigstens zwei auf dem Umfang des Innenstabes beabstandet verteilte Ringsegmente vorgesehen sind, die über speichenartige Stege mit dem Außenring verbunden sind.

Die US 6,380,750 B1 beschreibt eine Messsonde, bei welcher ein Abstandhalter zum Beabstanden eines Außenleiters von einem Innenleiter vorgesehen ist. Der Abstandhalter umgibt dabei im montierten Zustand den Außenleiter. Zur Beabstandung sind Abstandselemente auf der Innenfläche des Ringsegments des Abstandhalters vorgesehen.

### Zusammenfassung der Erfindung

Es ist eine Aufgabe der Erfindung, eine verbesserte Koaxialmesssonde zur Füllstandmessung bereitzustellen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist ein Abstandhalter zum Halten eines Abstandes zwischen einem stabförmigen Innenleiter und einem Außenleiter einer Füllstandmesssonde angegeben. Der Abstandhalter weist ein ringförmiges Element sowie zumindest drei Stützelemente auf, welche jeweils in einer radialen Richtung aus einer Innenfläche des ringförmigen Elementes herausragen. Dabei weist jedes der drei Stützelemente an einem der Innenfläche abgewandten Ende eine gebogene Stirnfläche auf. Das der Innenfläche abgewandte Ende ist zum Eingriff in eine Ausnehmung des stabförmigen Innenleiters ausgeführt.

Mit einem solchen Abstandhalter ist es möglich, eine stabile Abstützung des stabförmigen Innenleiters bzw. Innenstabes in einer koaxialen Messsonde, welche im Folgenden auch als Füllstandmesssonde oder einfach als Messsonde bezeichnet wird, bereitzustellen. Insbesondere kann die Eignung solcher Messsonden in Systemen mit Vibrationsbelastung verbessert werden. Beispielsweise können bei der Füllstandmessung Vibrationsbelastungen bzw. äußere Erschütterungen auftreten, welche das Messergebnis beeinträchtigen können.

Durch den Abstandhalter ist es möglich, auch bei Vibrationsbelastungen die Relativbewegung zwischen dem stabförmigen Innenleiter und dem Außenleiter der Messsonde zu verringern. Gleichzeitig können elektrische Abweichungen des Messsignals pro Abstandhalter gering gehalten werden. Beispielsweise können HF-Störsignale, das heißt hochfrequente Störsignale, gegenüber herkömmlichen Verbindungsmitteln zur Verbindung des stabförmigen Innenleiters und des Außenleiters reduziert werden.

Aufgrund des einfachen Aufbaus kann ferner ein gutes Ablaufverhalten von dem zu messenden Medium erreicht werden und der Verschmutzungsgrad der Messsonde kann gering gehalten werden, da wenige Flächen für Ablagerungen innerhalb der Messsonde durch den Abstandhalter eingebracht werden. Nicht zuletzt kann durch den Abstandhalter ein zuverlässiger Schutz gegen das Herausfallen des Abstandhalters aus der Messsonde gewährleistet werden.

Das ringförmige Element weist beispielsweise die Form eines röhrenförmigen Segments auf. Das ringförmige Element kann ein dünnwandiges röhrenförmiges Segment sein, beispielsweise in Form eines dünnwandigen Zylinders. Insbesondere kann das ringförmige Element die Form eines Abschnittes eines Zylindermantels aufweisen. Dabei weist das ringförmige Element eine zylinderförmige Innenfläche sowie eine zylinderförmige Außenfläche auf. Aus der zylinderförmigen Innenfläche ragen die drei Stützelemente in radialer Richtung zu einem Mittelpunkt des ringförmigen Elements heraus. Dabei können die jeweiligen Stützelemente entlang einer Umfangsrichtung des ringförmigen Elements in regelmäßigen Abständen zueinander auf der Innenfläche angeordnet sein. Beispielsweise beträgt der Winkel zwischen jedem Stützelement, insbesondere zwischen den radialen Richtungen der Stützelemente, bezüglich der Umfangsrichtung des ringförmigen Elements 120°.

Die drei Stützelemente weisen jeweils ein von der Innenfläche abgewandtes Ende auf. An diesem der Innenfläche abgewandten Ende befindet sich die gebogene Stirnfläche, welche beispielsweise eine einfach gekrümmte Fläche ist. Einfach gekrümmte Fläche bedeutet im Sinne der vorliegenden Erfindung, dass die Fläche nur entlang einer Richtung gebogen ist und entlang einer weiteren Richtung keine Krümmung aufweist. Somit kann die gebogene Stirnfläche beispielsweise ein Segment einer Zylindermantelfläche sein.

Jedes der drei Stützelemente kann ferner ein der Innenfläche zugewandtes Ende aufweisen, an welchem das jeweilige Stützelement an der Innenfläche des ringförmigen Elements befestigt ist. Zwischen diesem der Innenfläche zugewandten Ende und der Innenfläche selbst kann ein Radius als Übergang von der Innenfläche zu dem jeweiligen Stützelement vorgesehen sein. Der Abstandhalter kann ein flexibles bzw. elastisches Material aufweisen, so dass der Abstandhalter mithilfe eines Montagewerkzeuges auf dem stabförmigen Innenleiter positioniert werden kann und anschließend der Außenleiter über dem Abstandhalter aufgesetzt werden kann. Um den Abstandhalter auf dem stabförmigen Innenleiter zu fixieren, ist das der Innenfläche abgewandte Ende der Stützelemente zum Eingriff in eine Ausnehmung des stabförmigen Innenleiters ausgeführt.

Der stabförmige Innenleiter weist dazu ebenfalls drei Ausnehmungen auf, welche mit dem jeweiligen Stützelement des Abstandhalters korrespondieren, so dass das der Innenfläche abgewandte Ende des jeweiligen Stützelements in die korrespondierende Ausnehmung des stabförmigen Innenleiters eingreifen kann. Für den Fall, dass das der Innenfläche abgewandte Ende des Stützelements in die Ausnehmung des stabförmigen Innenleiters eingreift, unterscheidet sich der Radius der gebogenen Stirnfläche des der Innenfläche abgewandten Endes von einem Radius einer Oberfläche des stabförmigen Innenleiters. Jedoch kann der Radius der gebogenen Stirnfläche mit dem Radius der Oberfläche des stabförmigen Innenleiters übereinstimmen während der Abstandhalter auf dem stabförmigen Innenleiter positioniert wird. Dieser Aspekt wird in Folgenden und in der Figurenbeschreibung noch genauer erläutert werden.

Gemäß einer Ausführungsform der Erfindung verjüngen sich die zumindest drei Stützelemente in radialer Richtung. Die radiale Richtung stellt dabei zum Beispiel eine Mittelachse des jeweiligen Stützelementes dar.

Die radiale Richtung ist dabei eine radiale Richtung in Bezug zum ringförmigen Element, das heißt, die radiale Richtung verläuft durch den Mittelpunkt des ringförmigen Elements. Durch die Verjüngung ist die Querschnittsfläche des Stützelements senkrecht zur radialen Richtung an einem der Innenfläche des ringförmigen Elements zugewandten Ende größer als eine Querschnittsfläche des Stützelements an dem der Innenfläche abgewandten Ende des Stützelements. Auch dieser Aspekt wird in der Figurenbeschreibung noch genauer erläutert werden.

Die zumindest drei Stützelemente können eine kreisförmige oder eine ovale Querschnittsfläche aufweisen. Dabei kann sich die Form der Querschnittsfläche des jeweiligen Stützelements in radialer Richtung verändern. Beispielsweise kann die Querschnittsfläche an einem der Innenfläche des ringförmigen Elements zugewandten Ende eine ovale Form aufweisen, wobei die Querschnittsfläche des der Innenfläche abgewandten Endes eine Kreisform aufweist.

Gemäß einer weiteren Ausführungsform der Erfindung sind die zumindest drei Stützelemente in regelmäßigen Abständen entlang einer Umfangsrichtung des ringförmigen Elements angeordnet.

Dabei bezeichnet die Umfangsrichtung diejenige Richtung, die sich entlang der zylinderförmigen Innenfläche oder der zylinderförmigen Außenfläche des ringförmigen Elements erstreckt. Entlang der Umfangsrichtung können die Stützelemente jeweils in gleichen Abständen zueinander auf der Innenfläche des ringförmigen Elements angeordnet sein. Dabei kann ein Winkel von 120° zwischen den jeweiligen Stützelementen vorgesehen sein. Durch das Vorsehen von genau drei Stützelementen kann bereits ein effektiver Abstandhalter für den Betrieb einer Koaxialmesssonde bereitgestellt werden.

Für den Fall, dass mehr als drei Stützelemente auf der Innenfläche des ringförmigen Elements vorgesehen sind, kann ein entsprechend kleinerer Winkel zwischen den einzelnen Stützelementen vorgesehen sein, wobei die Stützelemente wiederum in gleichen Abständen entlang der Umfangsrichtung auf der Innenfläche des ringförmigen Elements angeordnet sein können. Somit kann eine gleichmäßige Kraftübertragung zwischen dem stabförmigen Innenleiter und dem Außenleiter der Messsonde im Falle einer Vibrationsbelastung erreicht werden.

Durch das Vorsehen von zumindest drei Stützelementen kann eine ausreichende Stabilität bzw. Widerstandsfähigkeit gegen Vibrationsbelastungen und zugleich eine einfache Montage des Abstandhalters auf dem stabförmigen Innenleiter gewährleistet werden. Insbesondere können die Stützelemente während der Montage des Abstandhalters auf dem stabförmigen Innenleiter an einer Oberfläche des stabförmigen Innenleiters vorbeigeführt werden. Dies wird im weiteren Verlauf der Beschreibung noch genauer erläutert werden.

Gemäß einer weiteren Ausführungsform der Erfindung weist die gebogene Stirnfläche des jeweiligen Stützelementes einen Radius auf, dessen Mittelpunkt nicht auf einer Rotationsachse des ringförmigen Elements bzw. des Abstandhalters liegt.

Insbesondere kann der Radius der gebogenen Stirnfläche so gewählt sein, dass bei der Verformung des Abstandhalters bzw. des ringförmigen Elements während der Montage eine optimale Führbarkeit der gebogenen Stirnflächen der Stützelemente über einer Oberfläche des stabförmigen Innenleiters gewährleistet wird. Bei einer solchen Verformung des Abstandhalters während der Montage kann eine Verschiebung der gebogenen Stirnflächen der Stützelemente, beispielsweise von jeweils 0,3 mm, in Bezug auf den Mittelpunkt des ringförmigen Elements erfolgen. Die gebogenen Stirnflächen werden dabei vom Mittelpunkt wegbewegt. Die gebogenen Stirnflächen bzw. die Auflageflächen der Stützelemente sind demnach so ausgelegt, dass der Verformungsweg zum Aufschieben auf den stabförmigen Innenleiter während der Montage möglichst gering ist, um somit eine Schädigung des Abstandhalters beim Aufdehnen zu vermeiden. In diesem Fall entspricht der Radius der gebogenen Stirnfläche dem Radius der Oberfläche des stabförmigen Innenleiters. Mit anderen Worten entspricht der Radius der gebogenen Stirnfläche während der Verformung, das heißt während der Montage des Abstandhalters auf dem stabförmigen Innenleiter, dem Radius der Oberfläche des stabförmigen Innenleiters, jedoch liegt der Mittelpunkt des Radius der gebogenen Stirnfläche vor oder nach der Montage, das heißt im entspannten Zustand des Abstandhalters, nicht auf der Rotationsachse des ringförmigen Elements. Somit ist die gebogene Stirnfläche dazu ausgeführt, eine optimale Führung des Abstandhalters über der Oberfläche des stabförmigen Elements während der Montage zu gewährleisten.

Gemäß der Erfindung weisen die zumindest drei Stützelemente jeweils eine Bohrung auf. Die Bohrungsachsen der durch die Stützelemente verlaufenden Bohrungen sind jeweils gegenüber einer Rotationsachse des ringförmigen Elements geneigt angeordnet.

Die Rotationsachse des ringförmigen Elements verläuft dabei wiederum durch den Mittelpunkt des ringförmigen Elements. Es sind somit schräge Bohrungen in den jeweiligen Stützelementen vorgesehen, wobei die Bohrungen dazu ausgeführt sind, ein Stiftelement eines Montagewerkzeugs aufzunehmen. Die Bohrungsachsen der jeweiligen Stützelemente können gegenüber der Rotationsachse des ringförmigen Elements um etwa 0° bis 20°, vorzugsweise um etwa 0° bis 10° und insbesondere um etwa 2,5° geneigt angeordnet sein. Die Bohrungen der jeweiligen Stützelemente können durch eine Mittelachse der Stützelemente verlaufen, welche beispielsweise auf der radialen Richtung der jeweiligen Stützelemente liegt.

Gemäß einer weiteren Ausführungsform der Erfindung schneiden sich die jeweiligen Bohrungsachsen der durch die Stützelemente verlaufenden Bohrungen in einem gemeinsamen Punkt, welcher auf der Rotationsachse des ringförmigen Elements liegt.

Mit anderen Worten besitzen sämtliche Bohrungsachsen der Stützelemente die gleiche Neigung gegenüber der Rotationsachse des ringförmigen Elements. Diese Neigung wird durch die Ausrichtung von den durch die Bohrungen aufzunehmenden Stiftelementen eines Montagewerkzeugs vorgegeben. Durch diese Neigung ist es möglich, den Abstandhalter durch die aufzunehmenden Stiftelemente des Montagewerkzeugs aufzudehnen bzw. vorzuspannen, um somit den Abstandhalter auf dem stabförmigen Innenleiter zu montieren.

Gemäß einer weiteren Ausführungsform der Erfindung weist das ringförmige Element eine zylinderförmige Außenfläche auf.

Gemäß einer weiteren Ausführungsform der Erfindung ist der Abstandhalter aus einem Kunststoffmaterial gefertigt.

Insbesondere ist es möglich, dass der Abstandhalter aus Polyetheretherketon (PEEK) gefertigt ist. Durch ein solches Material kann eine hohe Festigkeit über einen großen Temperaturbereich gewährleistet werden, wobei ein solches Material ferner chemisch beständig ist. Dies ist insbesondere von Vorteil, da der Abstandhalter bei der Messung des Füllstandes mit dem jeweiligen zu messenden Medium in Kontakt treten kann.

Gemäß einem Aspekt der Erfindung ist ein stabförmiger Innenleiter einer Messsonde angegeben. Der stabförmige Innenleiter weist eine erste Reihe mit zumindest drei Ausnehmungen entlang einer Umfangsrichtung des stabförmigen Innenleiters zur Aufnahme jeweils eines Stützelementes eines Abstandhalters, insbesondere des zuvor beschriebenen Abstandhalters, auf. Die Ausnehmungen weisen jeweils eine gebogene Grundfläche mit einem Radius auf, dessen Mittelpunkt nicht auf einer Rotationsachse des stabförmigen Innenleiters liegt. Die Ausnehmungen sind als Sacklochbohrungen vorgesehen.

Es ist möglich, auf diesem stabförmigen Innenleiter den zuvor beschriebenen Abstandhalter aufzusetzen, so dass der Abstandhalter den stabförmigen Innenleiter sowie den Außenleiter der Füllstandmesssonde in einer im Wesentlichen koaxialen Ausrichtung zueinander hält. Hierfür können an einer Oberfläche des stabförmigen Innenleiters die Ausnehmungen in Form von Vertiefungen in der Oberfläche des stabförmigen Innenleiters vorgesehen sein. Die Ausnehmungen können in Form von Bohrungen in dem stabförmigen Innenleiter vorgesehen sein, wobei die Grundfläche der Ausnehmungen eine einfach gebogene Form annimmt. Einfach gebogene Grundfläche bedeutet auch hier, dass die Grundfläche entlang einer Richtung, beispielsweise entlang einer Umfangsrichtung des stabförmigen Innenleiters gebogen ist und entlang einer weiteren Richtung, welche beispielsweise parallel zur Rotationsachse des stabförmigen Innenleiters ist, keine Krümmung aufweist.

Die gebogene Grundfläche der Ausnehmung weist dieselbe Krümmung auf wie die gebogene Stirnfläche an dem der Innenfläche abgewandten Ende des Stützelements des Abstandhalters. Somit kann während des Eingriffs das der Innenfläche abgewandte Ende, insbesondere die gebogene Stirnfläche des Stützelements des Abstandhalters auf der gebogenen Grundfläche des stabförmigen Innenleiters aufliegen. Insbesondere sind die Vertiefungen, das heißt die Ausnehmungen, in dem stabförmigen Innenleiter zur optimalen Auflage mit demselben Radius eingeformt wie die gebogene Stirnfläche der Stützelemente des Abstandhalters.

Gemäß einer Ausführungsform der Erfindung ist die gebogene Grundfläche der Ausnehmung einfach gekrümmt. Eine Rotationsachse der einfach gekrümmten Grundfläche der Ausnehmung und die Rotationsachse des stabförmigen Innenleiters sind dabei zueinander beabstandet.

Die gebogene Grundfläche der Ausnehmungen ist dabei an die gebogene Stirnfläche der Stützelemente des Abstandhalters angepasst. Insbesondere ist es möglich, dass die gebogene

Stirnfläche der Stützelemente des Abstandhalters während des Eingriffs in die Ausnehmungen des stabförmigen Innenleiters auf den gebogenen Grundflächen der Ausnehmungen des stabförmigen Innenleiters aufliegen. Ferner haben die gebogenen Grundflächen der jeweiligen Ausnehmung und der stabförmige Innenleiter Rotationsachsen, die zueinander beabstandet sind. Ferner sind auch die Rotationsachsen der gebogenen Grundflächen einer jeden Ausnehmung zueinander beabstandet. Mit anderen Worten hat jede gekrümmte Grundfläche einen Radius, dessen Mittelpunkt auf einer eigenen Rotationsachse liegt, wobei die Rotationsachsen der gekrümmten Grundflächen jeder Ausnehmung zueinander beabstandet sind.

Gemäß einer weiteren Ausführungsform der Erfindung weist der stabförmige Innenleiter ferner eine zweite Reihe mit zumindest drei Ausnehmungen entlang einer Umfangsrichtung des stabförmigen Innenleiters zur Aufnahme jeweils eines Stützelements eines Abstandhalters, insbesondere des zuvor beschriebenen Abstandhalters, auf. Dabei sind die zweite Reihe mit den zumindest drei Ausnehmungen und die erste Reihe mit den zumindest drei Ausnehmungen entlang der Rotationsachse des stabförmigen Innenleiters voneinander beabstandet. Weitere Reihen mit zumindest drei Ausnehmungen im stabförmigen Innenleiter sind ebenso möglich.

Somit können mehrere Abstandhalter an dem stabförmigen Innenleiter vorgesehen werden. Beispielsweise werden exakt zwei Abstandhalter zwischen dem stabförmigen Innenleiter und dem Außenleiter vorgesehen, um die Vibrationseigenschaften der Messsonde zu verbessern.

Die Stützelemente eines ersten Abstandhalters können dabei beispielsweise in die erste Reihe von Ausnehmungen eingreifen, wobei die Stützelemente eines zweiten Abstandhalters in die zweite Reihe von Ausnehmungen in den stabförmigen Innenleiter eingreifen.

Gemäß einem weiteren Aspekt der Erfindung ist eine Messsonde zur Ermittlung eines Füllstandes eines in einem Behälter befindlichen Mediums angegeben. Die Messsonde weist zumindest einen Abstandhalter, einen stabförmigen Innenleiter mit zumindest drei Ausnehmungen entlang einer Umfangsrichtung des stabförmigen Innenleiters sowie einen Außenleiter auf. Der Abstandhalter kann dabei der zuvor beschriebene Abstandhalter mit den entsprechenden Merkmalen sein. Auch der stabförmige Innenleiter kann der zuvor beschriebene stabförmige Innenleiter sein. Der Abstandhalter ist dazu ausgeführt, durch Eingriff der Stützelemente in die Ausnehmungen des stabförmigen Innenleiters den Außenleiter und den stabförmigen Innenleiter im Wesentlichen koaxial zueinander zu halten.

Mit einer solchen Messsonde ist es möglich, die Widerstandsfähigkeit gegen Vibrationsbelastungen zu verbessern und gleichzeitig ein gutes Ablaufverhalten von dem zu messenden Medium innerhalb der Messsonde zu gewährleisten. Ferner ist es möglich, aufgrund des einfachen Aufbaus Ablagerungen von zu messendem Medium in der Messsonde zu vermeiden.

Beim Eingriff der Stützelemente in die Ausnehmungen des stabförmigen Innenleiters können die gebogenen Stirnflächen der jeweiligen Stützelemente des Abstandhalters auf den korrespondierenden gebogenen Grundflächen der jeweiligen Ausnehmungen des stabförmigen Innenleiters aufliegen. Somit kann ein fester Sitz zwischen dem stabförmigen Innenleiter und dem Abstandhalter bereitgestellt werden. Ferner kann durch einen kleinen Luftspalt zwischen der zylinderförmigen Außenfläche des ringförmigen Elements und einer Innenfläche des Außenleiters ein nahezu fester Sitz des Abstandhalters in dem Außenleiter gewährleistet werden. Es ist auch möglich, dass kein Luftspalt vorgesehen ist, so dass ein fester, spielfreier Sitz entsteht. Jedenfalls kann ein fester bzw. nahezu Sitz des stabförmigen Innenleiters in dem Außenleiter der Messsonde gewährleistet werden und eine verbesserte Stabilität der Messsonde insgesamt gegenüber Vibrationsbelastungen erreicht werden. Gemäß einer Ausführungsform der Erfindung sind der stabförmige Innenleiter und der Außenleiter mittels zwei entlang einer Rotationsachse des stabförmigen Innenleiters zueinander beabstandeten Abstandhaltern im Wesentlichen koaxial zueinander ausgerichtet.

Durch das Vorsehen von zwei Abstandhaltern auf dem stabförmigen Innenleiter zur Beabstandung des Außenleiters gegenüber dem stabförmigen Innenleiter kann eine verbesserte Widerstandsfähigkeit der gesamten Messsonde gegenüber Vibrationsbelastungen bereitgestellt werden.

Dabei werden die wirkenden Kräfte von dem Außenleiter über die Außenfläche des Abstandhalters auf den Abstandhalter übertragen und über die Stützelemente des Abstandhalters weiter auf den stabförmigen Innenleiter übertragen. Entsprechend erfolgt die Kraftübertragung auch auf dem entgegengesetzten Weg.

Gemäß einer weiteren Ausführungsform der Erfindung weist das ringförmige Element des Abstandhalters eine zylinderförmige Außenfläche auf. Zwischen der zylinderförmigen Außenfläche des ringförmigen Elements und einer Innenfläche des Außenleiters ist ein Luftspalt vorgesehen.

Die zylinderförmige Außenfläche des ringförmigen Elements kann eine Abmessung aufweisen, die mit der Innenfläche des Außenleiters der Messsonde korrespondiert, so dass ein vorgegebener Abstand bzw. ein Luftspalt zwischen dem Abstandhalter und dem Außenleiter bereitgestellt werden kann. Dadurch kann wiederum ein nahezu spielfreier Sitz des Außenleiters der Füllstandmesssonde auf dem stabförmigen Innenleiter gewährleistet werden, so dass eine verbesserte Widerstandsfähigkeit der Füllstandmesssonde gegen Vibrationslasten bzw. gegen äußere Erschütterungen erreicht werden kann. Der Einfluss von Vibrationsbewegungen der Füllstandmesssonde auf das Messergebnis kann somit verringert werden. Gleichzeitig kann durch den Aufbau des Abstandhalters eine einfache Montage der koaxialen Füllstandmesssonde aus stabförmigem Innenleiter und Außenleiter gewährleistet werden.

Gemäß einem nicht beanspruchten Aspekt ist ein Werkzeug zur Montage eines Abstandhalters, wie er zuvor beschrieben wurde, auf einem stabförmigen Innenleiter angegeben.

Insbesondere ist das Werkzeug dazu ausgeführt, den Abstandhalter auf dem stabförmigen Innenleiter zu positionieren, so dass die Stützelemente des Abstandhalters mit den Ausnehmungen des stabförmigen Innenleiters in Eingriff gebracht werden können. Das Werkzeug weist eine ringförmige Spannvorrichtung mit zumindest drei Stiftelementen auf. Die Stiftelemente weisen jeweils eine Längsrichtung auf und sind derart beweglich in der ringförmigen Spannvorrichtung gelagert, dass sich die Längsachsen der jeweiligen Stiftelemente stets in einem Punkt schneiden. Die Stiftelemente können entlang einer Umfangsrichtung an einer Stirnseite der ringförmigen Spannvorrichtung in regelmäßigen Abständen angeordnet sein. Beispielsweise beträgt ein Winkel zwischen den jeweiligen Stiftelementen in Bezug auf die Umfangsrichtung jeweils 120°. Die Stiftelemente können dazu ausgeführt sein, den Abstandhalter zur Montage auf dem stabförmigen Innenleiter vorzuspannen, indem das Werkzeug entlang der Rotationsachse des ringförmigen Elements verschoben wird, so dass die Stiftelemente, welche geneigt gegenüber der Rotationsachse des ringförmigen Elements ausgerichtet sind, in die Bohrungen der Stützelemente eingeschoben werden.

Die Stiftelemente sind dazu ausgeführt, in die in den Stützelementen des Abstandhalters vorgesehenen Bohrungen einzugreifen, wobei ein Hineinschieben der Stiftelemente des Werkzeugs in die Bohrungen der Stützelemente zu einem Aufdehnen bzw. Vorspannen des Abstandhalters führt. Der Abstandhalter wird mit anderen Worten aufgedehnt, so dass die Stützelemente über die Oberfläche des stabförmigen Innenleiters geführt werden können, um den Abstandhalter an der entsprechenden Stelle auf dem stabförmigen Innenleiter zu positionieren.

Nach dem Positionieren können die Stiftelemente wieder aus den Bohrungen der Stützelemente herausgezogen werden, so dass sich der Abstandhalter wieder entspannt und die Stützelemente des Abstandhalters mit den Ausnehmungen des stabförmigen Innenleiters zum Eingriff kommen.

Gemäß einem weiteren Aspekt der Erfindung ist ein Montageverfahren zur Montage eines Abstandhalters, wie er oben beschrieben ist, auf einem stabförmigen Innenleiter angegeben. In einem Schritt des Verfahrens erfolgt ein Vorspannen des Abstandhalters, so dass die Stützelemente des ringförmigen Elements des Abstandhalters über einer Oberfläche des stabförmigen Innenleiters entlang einer Rotationsachse des stabförmigen Innenleiters führbar sind. In einem weiteren Schritt erfolgt ein Positionieren des Abstandhalters in Bezug zu dem stabförmigen Innenleiter durch eine Verschiebung des Abstandhalters entlang der Rotationsachse des stabförmigen Innenleiters und in einem weiteren Schritt des Verfahrens erfolgt ein Entspannen des Abstandhalters, so dass die Stützelemente des ringförmigen Elements in korrespondierende Ausnehmungen des stabförmigen Innenleiters eingreifen.

Für das Montageverfahren kann das zuvor beschriebene Werkzeug zur Montage des Abstandhalters verwendet werden. In einem weiteren Schritt des Verfahrens erfolgt ein Vorspannen des Abstandhalters, so dass die Stützelemente des ringförmigen Elements aus den korrespondierenden Ausnehmungen des stabförmigen Innenleiters herausgelöst werden, um somit den Abstandhalter vom stabförmigen Innenleiter zu demontieren. Das Montageverfahren kann somit auch die Demontage des Abstandhalters vom stabförmigen Innenleiter umfassen.

Durch den erfindungsgemäßen Abstandhalter ist es möglich, eine stabile Abstützung des stabförmigen Innenleiters innerhalb der koaxialen Messsonde zu gewährleisten. Insbesondere wird die Eignung solcher Sonden bei Messungen unter Vibrationsbelastungen verbessert. Pro Abstandhalter kommt es nur zu einer geringen elektrischen Abweichung des Messsignals, so dass die Messgenauigkeit durch den Abstandhalter nicht beeinflusst wird. Ferner wird ein gutes Ablaufverhalten des zu messenden Mediums bereitgestellt und es werden Ablagerungen innerhalb der Messsonde vermieden, da nur wenige Flächen durch den Abstandhalter in die Messsonde eingebracht werden. Ferner ist ein Herausfallen des Abstandhalters aus der Messsonde im montierten Zustand nicht möglich.

Der Abstandhalter kann aus stabilem Kunststoffmaterial, zum Beispiel Polyetheretherketon (PEEK), mit einer hohen Festigkeit über einen großen Temperaturbereich und chemischer Beständigkeit gefertigt werden. Der Abstandhalter kann durch schräge Löcher bzw. Bohrungen oder auch Ansätze mit einem Hilfsmittel, das heißt mit einem Werkzeug, so verformt werden, dass er auf den stabförmigen Innenleiter aufgeschoben werden kann. Mit anderen Worten können anstatt der Bohrungen auch Sacklöcher in den Stützelementen vorgesehen sein, wobei die Bohrungsachsen der Sacklöcher jeweils gegenüber der Rotationsachse des ringförmigen Elements geneigt angeordnet sind. Es kann also in jedem Stützelement des Abstandhalters jeweils ein Sackloch vorgesehen sein, dessen Bohrungsachse gegenüber der Rotationsachse des ringförmigen Elements des Abstandhalters geneigt angeordnet ist. Somit kann mit dem zuvor beschriebenen Werkzeug der Abstandhalter auch an dem stabförmigen Innenleiter befestigt werden, indem die Stiftelemente des Werkzeugs in die Sacklöcher der Stützelemente des Abstandhalters eingreifen und somit vorspannen, um den Abstandhalter über dem stabförmigen Innenleiter zu positionieren.

Nach dem Entfernen des Werkzeugs kommen die Stützelemente des Abstandhalters jedenfalls in den Vertiefungen des stabförmigen Innenleiters zu liegen. Mit anderen Worten wird mit der Rasterung eine Position festgelegt und ein Verschieben oder Verdrehen des Abstandhalters gegenüber dem stabförmigen Innenleiter verhindert. Die Auflageflächen, das heißt die gebogenen Stirnflächen der Stützelemente sind so ausgelegt, dass der Verformungsweg zum Aufschieben auf den stabförmigen Innenleiter möglichst gering ist, um somit eine Schädigung des Abstandhalters beim Vorspannen bzw. Aufdehnen zu vermeiden. In diesem Fall entspricht der Radius der gebogenen Stirnfläche des jeweiligen Stützelements dem Außenradius der Oberfläche des stabförmigen Innenleiters.

Auch die Vertiefungen bzw. Ausnehmungen weisen eine gebogene bzw. einfach gekrümmte Grundfläche auf, welche zur optimalen Auflage der gebogenen Stirnflächen der Stützelemente mit demselben Radius eingeformt sind. Vorzugsweise sind drei Stützelemente vorgesehen, die eine Aufnahme der Kräfte erlauben. Ein äußerer Ringbereich zwischen den Stützelementen des ringförmigen Elements ist so elastisch ausgelegt, dass ein gleichzeitiges Nachaußenschieben der drei Stützelemente während des Vorspannens des Abstandhalters möglich ist. Erst somit lässt sich der Abstandhalter über dem Außendurchmesser, das heißt über der Oberfläche des stabförmigen Innenleiters, an den mit den Ausnehmungen bzw. Vertiefungen versehenen Stellen platzieren. Durch die außen umgebende Ringform kann sich der Abstandhalter nicht mehr selbst aufdehnen und sich somit nicht mehr selbst lösen. Im Zusammenbau mit dem umgebenden ringförmigen Element werden seitliche Kräfte, die durch Vibrationen auf den stabförmigen Innenleiter wirken, über die eingelassenen Stützelemente auf den Außenring übertragen und in alle Richtungen vom röhrenförmigen Außenleiter aufgenommen.

Letztlich kann durch den Abstandhalter für die koaxiale Messsonde ein stabiles koaxiales System aus einem stabilen Material bereitgestellt werden, welches seitliche Kräfte aufnehmen kann und sich nicht verschieben lässt. Eine solche Messsonde hat zudem ein günstiges Design für einen guten Medienablauf und für ein reduziertes HF-Störsignal.

### Kurze Beschreibung der Figuren

- Fig. 1: zeigt eine perspektivische Ansicht eines Abstandhalters gemäß einem Ausführungsbeispiel der Erfindung.
- Fig. 2: zeigt eine Draufsicht auf einen Abstandhalter gemäß einem Ausführungsbeispiel der Erfindung.
- Fig. 3: zeigt eine Schnittansicht eines Abstandhalters gemäß einem Ausführungsbeispiel der Erfindung.
- Fig. 4: zeigt eine perspektivische Ansicht eines Abstandhalters gemäß einem weiteren Ausführungsbeispiel der Erfindung.
- Fig. 5: zeigt eine Draufsicht auf einen Abstandhalter gemäß einem weiteren Ausführungsbeispiel der Erfindung.
- Fig. 6: zeigt eine Schnittansicht eines Abstandhalters gemäß einem weiteren Ausführungsbeispiel der Erfindung.
- Fig. 7: zeigt eine perspektivische Ansicht eines stabförmigen Innenleiters gemäß einem Ausführungsbeispiel der Erfindung.
- Fig. 8: zeigt eine perspektivische Ansicht eines stabförmigen Innenleiters und eines in den stabförmigen Innenleiter eingreifenden Abstandhalters gemäß einem Ausführungsbeispiel der Erfindung.
- Fig. 9: zeigt eine Schnittansicht eines Außenleiters sowie eine perspektivische Ansicht eines stabförmigen Innenleiters und eines in den stabförmigen Innenleiter eingreifenden Abstandhalters gemäß einem Ausführungsbeispiel der Erfindung.
- Fig. 10: zeigt ein Montagewerkzeug zur Montage eines Abstandhalters.
- Fig. 11: zeigt ein Werkzeug zur Montage eines Abstandhalters.
- Fig. 12: zeigt ein Vorspannen eines Abstandhalters durch ein Werkzeug.
- Fig. 13: zeigt ein Positionieren eines Abstandhalters über einem stabförmigen Innenleiter mithilfe eines Werkzeugs.
- Fig. 14: zeigt ein Positionieren eines Abstandhalters auf einem stabförmigen Innenleiter mithilfe eines Werkzeugs.
- Fig. 15: zeigt eine Seitenansicht eines stabförmigen Innenleiters gemäß einem Ausführungsbeispiel der Erfindung.
- Fig. 16: zeigt eine Schnittansicht einer Koaxialmesssonde gemäß einem Ausführungsbeispiel der Erfindung.
- Fig. 17: zeigt eine Seitenansicht einer Koaxialmesssonde gemäß einem Ausführungsbeispiel der Erfindung.
- Fig. 18: zeigt eine Schnittansicht eines stabförmigen Innenleiters gemäß einem Ausführungsbeispiel der Erfindung.
- Fig. 19: zeigt eine Schnittansicht einer Koaxialmesssonde gemäß einem Ausführungsbeispiel der Erfindung.
- Fig. 20: zeigt ein Flussdiagramm für ein Montageverfahren zur Montage eines Abstandhalters auf einem stabförmigen Innenleiter gemäß einem Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können auch durch unterschiedliche Bezugszeichen bezeichnet sein.

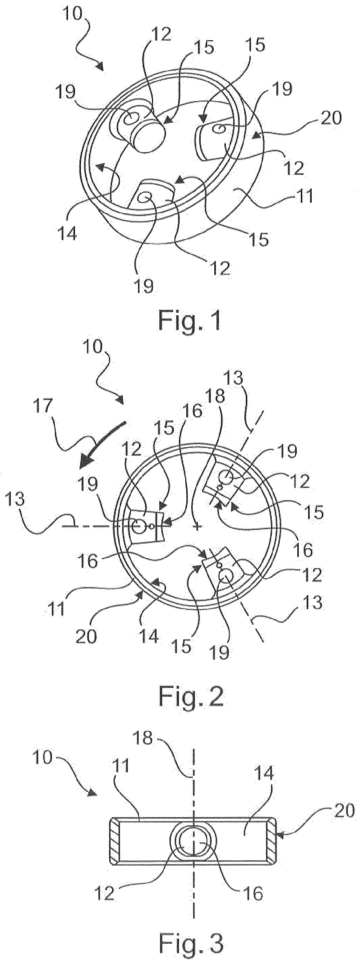

Fig. 1 zeigt eine perspektivische Ansicht eines Abstandhalters 10, wobei der Abstandhalter 10 ein ringförmiges Element 11 sowie drei Stützelemente 12 aufweist. Ferner sind in jedem der drei Stützelemente 12 Bohrungen 19 vorgesehen. Insbesondere ist in jedem Stützelement 12 eine Bohrung 19 vorgesehen. Die Bohrung 19 kann dabei eine Durchgangsbohrung oder eine Sacklochbohrung sein. Die Stützelemente 12 sind an einer Innenfläche 14 des ringförmigen Elements 11 angebracht. Dabei kann als Übergang zwischen dem jeweiligen Stützelement 12 und der Innenfläche 14 ein Radius vorgesehen sein. Die jeweiligen Stützelemente 12 weisen an einem der Innenfläche 14 abgewandten Ende 15 eine Stirnfläche auf.

Fig. 1 zeigt ferner eine zylinderförmige Außenfläche 20 mit einer vorgegebenen Oberflächengüte. Die zylinderförmige Außenfläche 20 ist dazu ausgeführt, einen in Fig. 1 nicht dargestellten Außenleiter auf Abstand zu halten.

Wie in Fig. 2 zu erkennen ist, weisen die an dem der Innenfläche 14 abgewandten Ende 15 vorgesehenen Stirnflächen 16 eine gebogene Form auf. An jedem der drei Stützelemente 12 ist somit jeweils eine gebogene Stirnfläche 16 an dem der Innenfläche 14 des ringförmigen Elements 11 abgewandten Ende 15 vorgesehen.

In der Draufsicht des Abstandhalters 10 der Fig. 2 ist zu erkennen, dass die Stützelemente 12 in regelmäßigen Abständen entlang einer Umfangsrichtung 17 des ringförmigen Elements 11 angeordnet sind. Insbesondere kann vorgesehen sein, dass die Stützelemente 12 entlang der Umfangsrichtung 17 jeweils einen gleichen Abstand zueinander aufweisen. Vorzugsweise beträgt der Winkel zwischen den radialen Richtungen 13 der jeweiligen Stützelemente 12 jeweils 120°. Das ringförmige Element 11 des Abstandhalters 10 weist ferner einen Mittelpunkt auf, welcher auf einer Rotationsachse 18 des ringförmigen Elements 11 liegt.

Fig. 3 zeigt eine Schnittansicht durch den Abstandhalter 10, insbesondere durch das ringförmige Element 11. Es ist zu erkennen, dass das ringförmige Element 11 an seinen Kanten, insbesondere an den die Innenfläche 14 begrenzenden Kanten, eine Fase aufweisen kann. Es ist ferner zu erkennen, dass das Stützelement 12 in einem Grundriss an der Innenfläche 14 eine ovale Form bzw. eine von einer Kreisform abweichende Grundrissform aufweisen kann. Die Stirnfläche 16 ist in Fig. 3 in einer Draufsicht dargestellt. Ferner ist die Rotationsachse 18 des ringförmigen Elements 11 bzw. des Abstandhalters 10 dargestellt. Die Rotationsachse 18 verläuft durch den Mittelpunkt des ringförmigen Elements 11.

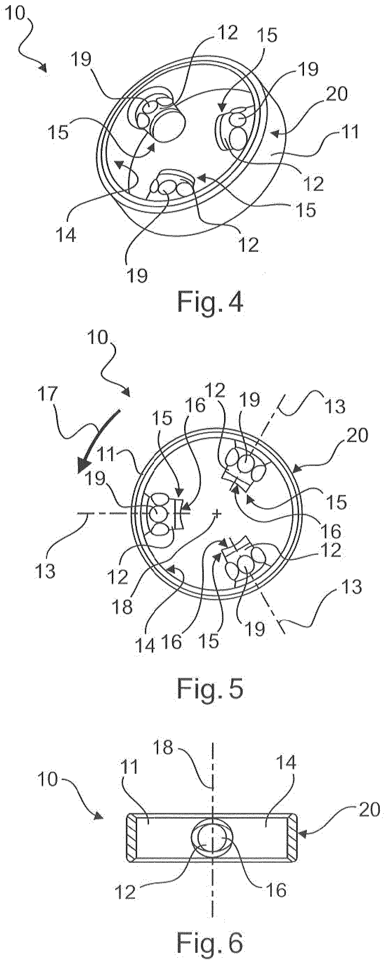

Fig. 4 zeigt ein weiteres Beispiel für einen Abstandhalter 10, welcher ein ringförmiges Element 11 sowie drei Stützelemente 12 aufweist. Dabei sind in den Stützelementen 12 jeweils eine Bohrung 19, welche beispielsweise als Durchgangsbohrung oder als Sacklochbohrung ausgeführt sein kann, vorgesehen. Die Außenfläche 20 des ringförmigen Elements 11 ist wiederum ausgeführt, einen in Fig. 4 nicht dargestellten Außenleiter auf Abstand zu halten. Auch in dieser Ausführungsform des Abstandhalters 10 sind gebogene Stirnflächen an einem der Innenfläche 14 abgewandten Ende 15 des jeweiligen Stützelements 12 vorgesehen.

Diese gebogenen Stirnflächen 16 sind in Fig. 5 in der Draufsicht auf den Abstandhalter 10 zu erkennen. Auch in dieser Ausführungsform sind die Stützelemente 12 entlang der Umfangsrichtung 17 in regelmäßigen, vorzugsweise jedoch in gleichen, Abständen zueinander angeordnet. Der Winkel zwischen den radialen Richtungen 13 der jeweiligen Stützelemente 12 beträgt beispielsweise 120°. Die radialen Richtungen 13 der jeweiligen Stützelemente verlaufen durch den Mittelpunkt des ringförmigen Elements 11, welcher auf der Rotationsachse 18 des ringförmigen Elements bzw. des Abstandhalters 10 liegt.

Fig. 6 zeigt den Abstandhalter 10, bei dem das ringförmige Element 11 geschnitten dargestellt ist. Es ist zu erkennen, dass das Stützelement 12 eine Grundrissfläche im Bereich der Innenfläche 14 des ringförmigen Elements 11 aufweist, welcher von einer Kreisform abweicht bzw. oval ist. Ferner ist es möglich, dass das ringförmige Element 11 insbesondere im Bereich der Innenfläche 14 an den Kanten Fasen aufweist.

Die in den Figuren 4 bis 6 gezeigte Ausführungsform des Abstandhalters 10 weist runde Stützelemente 12 auf. Ferner sind hier Materialverstärkungen im Bereich der geneigt angeordneten Bohrungen 19 der Stützelemente 12 vorgesehen. Die Materialverstärkung weist zum Beispiel die Form einer aufgesetzten Kugelform auf.

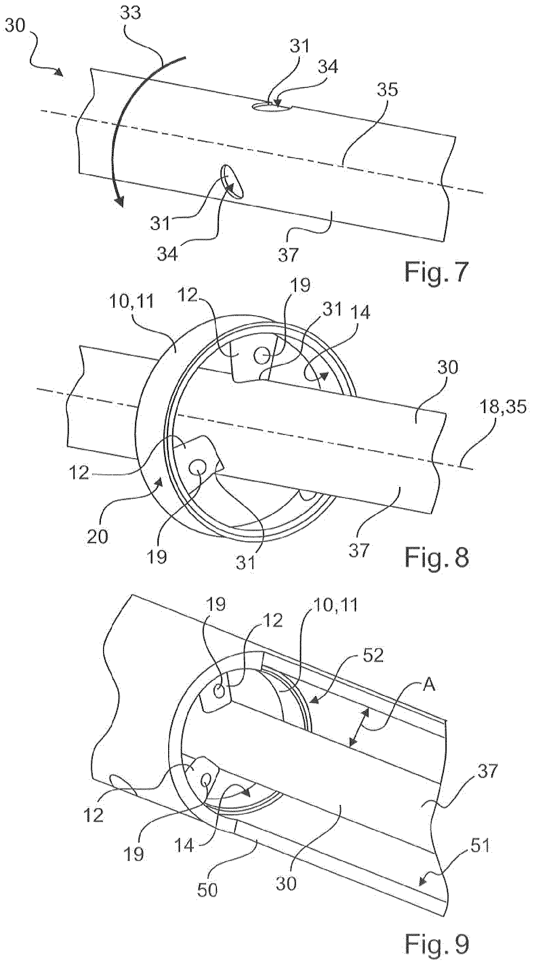

Fig. 7 zeigt einen stabförmigen Innenleiter 30 mit Ausnehmungen 31, welche in einer Oberfläche 37 des stabförmigen Innenleiters 30 vorgesehen sind. Die Ausnehmungen 31 sind in einer Reihe auf der Oberfläche 37 des stabförmigen Innenleiters 30 entlang einer Umfangsrichtung 33 des stabförmigen Innenleiters vorgesehen. Dabei können mindestens drei Ausnehmungen 31 auf der Oberfläche 37 des stabförmigen Innenleiters 30 vorgesehen sein. Die Ausnehmungen 31 sind als Sacklochbohrungen vorgesehen, wobei eine Grundfläche 34 der jeweiligen Ausnehmungen 31 eine gebogene Kontur aufweist. Insbesondere weist die Grundfläche 34 der Ausnehmungen 31 eine einfach gekrümmte Form auf, wobei die Grundfläche 34 bezüglich einer Rotationsachse gekrümmt ist, die parallel und vorzugsweise beabstandet von einer Rotationsachse 35 des stabförmigen Innenleiters 30 verläuft. Mit anderen Worten weist die gebogene Grundfläche 34 einen Radius auf, dessen Mittelpunkt nicht auf der Rotationsachse 35 des stabförmigen Innenleiters 30 liegt.

Fig. 8 zeigt einen stabförmigen Innenleiter 30 und einen sich mit dem stabförmigen Innenleiter 30 in Eingriff befindenden Abstandhalter 10. Der Abstandhalter 10 weist ein ringförmiges Element 11 mit einer Innenfläche 14 auf. Aus der Innenfläche 14 ragen die Stützelemente 12 in radialer Richtung des ringförmigen Elements 11 heraus. Radiale Richtung bedeutet dabei, dass die Stützelemente in Richtung eines Mittelpunktes des ringförmigen Elements 11 aus der Innenfläche 14 herausragen und somit die radiale Richtung in dem in Fig. 8 dargestellten Beispiel durch die Rotationsachse 18 des ringförmigen Elements 11, aber auch durch die Rotationsachse 35 des stabförmigen Innenleiters 30 verläuft.

Die Stützelemente 12 ragen in die Ausnehmungen 31, welche in der Oberfläche 37 des stabförmigen Innenleiters 30 vorgesehen sind, hinein. Dabei sind die gebogenen Stirnflächen 16, welche in Fig. 8 verdeckt sind, in den stabförmigen Innenleiter 30 eingelassen und liegen auf der ebenfalls verdeckten Grundfläche 34 des stabförmigen Innenleiters 30 auf, welche in Fig. 8 ebenfalls nicht dargestellt ist, auf.

Zu erkennen sind ebenfalls Bohrungen 19, welche durch die jeweiligen Stützelemente 12 des Abstandhalters 10 hindurchgehen.

Fig. 9 zeigt einen Außenleiter 50 in einer aufgeschnittenen Darstellung sowie den stabförmigen Innenleiter 30, in den der Abstandhalter 10 eingreift. Die Fig. 9 entspricht somit dem in Fig. 8 dargestellten Fall, wobei in Fig. 9 zusätzlich der Außenleiter 50 der koaxialen Messsonde dargestellt ist. Der Abstandhalter 10 ist insbesondere ausgeführt, einen Abstand A zwischen dem stabförmigen Innenleiter 30 und dem Außenleiter 50 im Wesentlichen konstant zu halten bzw. einzustellen. Durch den Abstandhalter 10, welcher mittels seiner Stützelemente 12 in den stabförmigen Innenleiter 30 eingreift, können somit Kräfte zwischen dem stabförmigen Innenleiter 30 und dem röhrenförmigen Außenleiter 50 übertragen werden. Zwischen der Außenfläche 20 des Abstandhalters 10 und dem Außenleiter 50 kann ein Luftspalt vorgesehen sein, so dass nahezu kein Spiel zwischen dem Abstandhalter 10 und dem Außenleiter 50 vorhanden ist. Kräfte können somit zwischen dem stabförmigen Innenleiter 30 und dem Außenleiter 50 über den Abstandhalter 10 effektiv übertragen werden. Mit anderen Worten kann der Abstand A zwischen dem Außenleiter 50 und dem stabförmigen Innenleiter 30 im Wesentlichen konstant gehalten werden, auch wenn seitliche Kräfte auf den stabförmigen Innenleiter 30 oder den Außenleiter 50, wie beispielsweise Vibrationsbelastungen, einwirken.

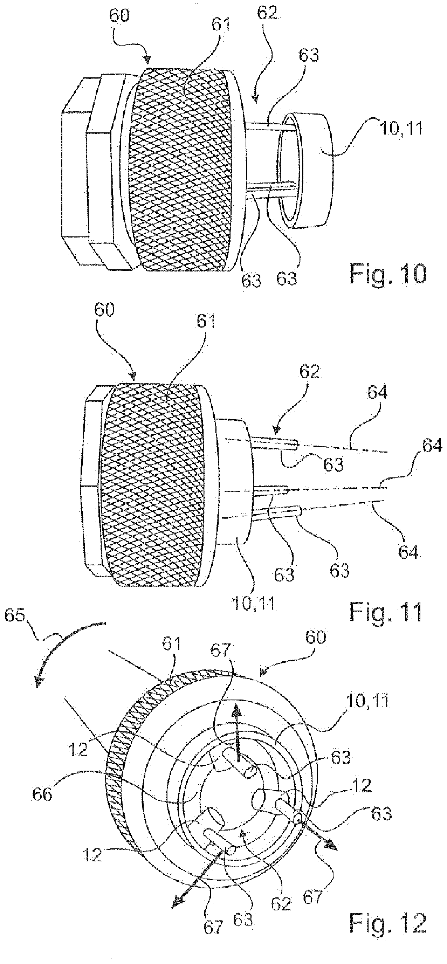

Fig. 10 zeigt ein Werkzeug 60 zur Montage des Abstandhalters 10 auf dem stabförmigen Innenleiter 30. Der stabförmige Innenleiter 30 ist in Fig. 10 nicht dargestellt. Das Werkzeug 60 weist eine ringförmige Spannvorrichtung 62 mit zumindest drei Stiftelementen 63 auf. Das Werkzeug 60 weist ferner eine raue Oberfläche 61 zur Betätigung des Werkzeugs 60 auf.

Wie in Fig. 11 zu erkennen ist, weisen die Stiftelemente 63 jeweils eine Längsachse 64 auf, wobei die Längsachsen 64 der einzelnen Stiftelemente 63 zueinander geneigt angeordnet sind. Die Stiftelemente 63 sind beweglich in der ringförmigen Spannvorrichtung 62 gelagert, so dass sich die Längsachsen 64 der jeweiligen Stiftelemente 63 stets in einem Punkt schneiden. Es ist jedoch auch möglich, dass sich die Längsachsen 64 der einzelnen Stiftelemente 63 nicht in einem Punkt schneiden. Auf dem Werkzeug 60 ist ferner der Abstandhalter 10 vorgesehen. Insbesondere ist der Abstandhalter 10 auf das Werkzeug 60 aufgesteckt bzw. aufgeschoben, um diesen am stabförmigen Innenleiter zu montieren.

In Fig. 12 ist zu erkennen, dass die Stiftelemente 63 des Werkzeugs 60 durch die Bohrungen 19 der jeweiligen Stützelemente 12 hindurchgeschoben sind. Ferner ist in Fig. 12 zu erkennen, dass die Stiftelemente 63 entlang einer Umfangsrichtung 65 des Werkzeugs 60 an einer Stirnseite 66 der ringförmigen Spannvorrichtung 62 in regelmäßigen Abständen angeordnet sind. Beispielsweise sind auch die Stiftelemente 63 in jeweils gleichen Abständen zueinander entlang der Umfangsrichtung 65 der ringförmigen Spannvorrichtung 62 angeordnet. Durch das Hindurchschieben der Stiftelemente 63 des Werkzeugs 60 durch die Bohrungen 19 der jeweiligen Stützelemente 12 erfolgt das Vorspannen des Abstandhalters 10. Das Werkzeug 60 wird dabei entlang der Rotationsachse 18 des ringförmigen Elements 11 verschoben.

Der Abstandhalter 10 wird also auf das Werkzeug 60 aufgesteckt. Es ist möglich, dass das Werkzeug 60 den Abstandhalter 10 vorspannt, indem die Stiftelemente 63 in die durch Pfeile 67 markierten Richtungen bewegt werden. Mit anderen Worten können die Stiftelemente 63 dazu ausgeführt sein, den Abstandhalter 10 zur Montage auf dem in Fig. 12 nicht dargestellten stabförmigen Innenleiter 30 vorzuspannen, indem ein Winkel zwischen den Längsachsen 64 zumindest zweier Stiftelemente 63, vorzugsweise jedoch aller drei Stiftelemente 63, verringert wird. Bevorzugt erfolgt das Vorspannen des Abstandhalters 10 jedoch durch bloßes Hindurchschieben der Stiftelemente 63 durch die Bohrungen 19 der Stützelemente 12. Die Verformung des ringförmigen Elements 11 des Abstandhalters 10 ist in Fig. 12 deutlich zu erkennen. Dabei wird der Abstandhalter 10 bzw. das ringförmige Element 11 an den Stellen aufgeweitet, an welchen sich die Stiftelemente 63 befinden.

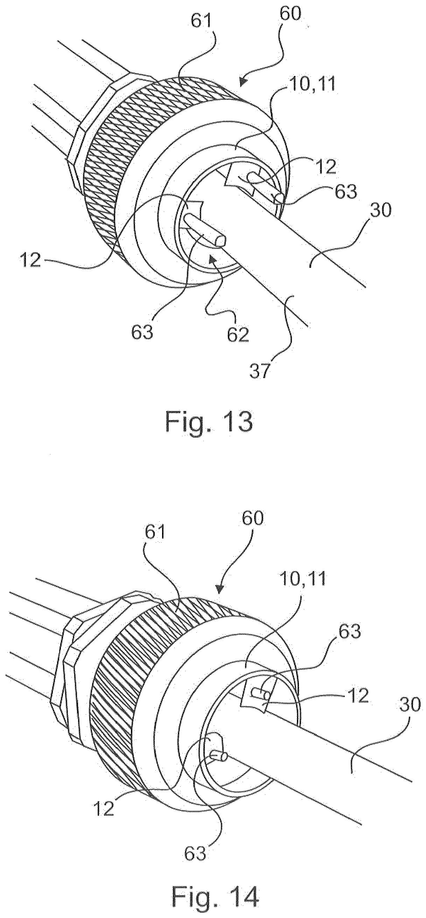

Fig. 13 zeigt das Positionieren des Abstandhalters 10 auf dem stabförmigen Innenleiter 30, wobei der Abstandhalter 10 mithilfe der Stiftelemente 63 des Werkzeugs 60 vorgespannt ist. Durch die Stiftelemente 63 kann der Abstandhalter 10 derart vorgespannt werden, dass die gebogenen Stirnflächen 16 der Stützelemente 12 entlang oder auf der Oberfläche 37 des stabförmigen Innenleiters 30 führbar sind. Mit anderen Worten wird der Abstandhalter 10 über der Oberfläche 37 des stabförmigen Innenleiters 30 an die entsprechende Position auf dem stabförmigen Innenleiter 30 aufgeschoben.

Wie in Fig. 14 zu erkennen ist, wird nach der Positionierung des Abstandhalters 10 auf dem stabförmigen Innenleiter 30 der Abstandhalter 10 entspannt, indem die Stiftelemente 63 wieder aus den Bohrungen 19 der Stützelemente 12 herausgezogen werden, so dass die Stützelemente 12 des Abstandhalters 10 in die Ausnehmungen 31 des stabförmigen Innenleiters 30 eingreifen. Dabei können die gebogenen Stirnflächen 16 der Stützelemente 12 auf den gebogenen Grundflächen 34 des stabförmigen Innenleiters 30 aufliegen. Es sei ferner angemerkt, dass während des Aufschiebens des Abstandhalters 10 auf den stabförmigen Innenleiter 30, wie es in Fig. 13 dargestellt ist, die Verformung des Abstandhalters 10 derart erfolgt, dass die gebogenen Stirnflächen 16 der Stützelemente 12 denselben Radius wie die Oberfläche 37 des stabförmigen Innenleiters 30 aufweisen.

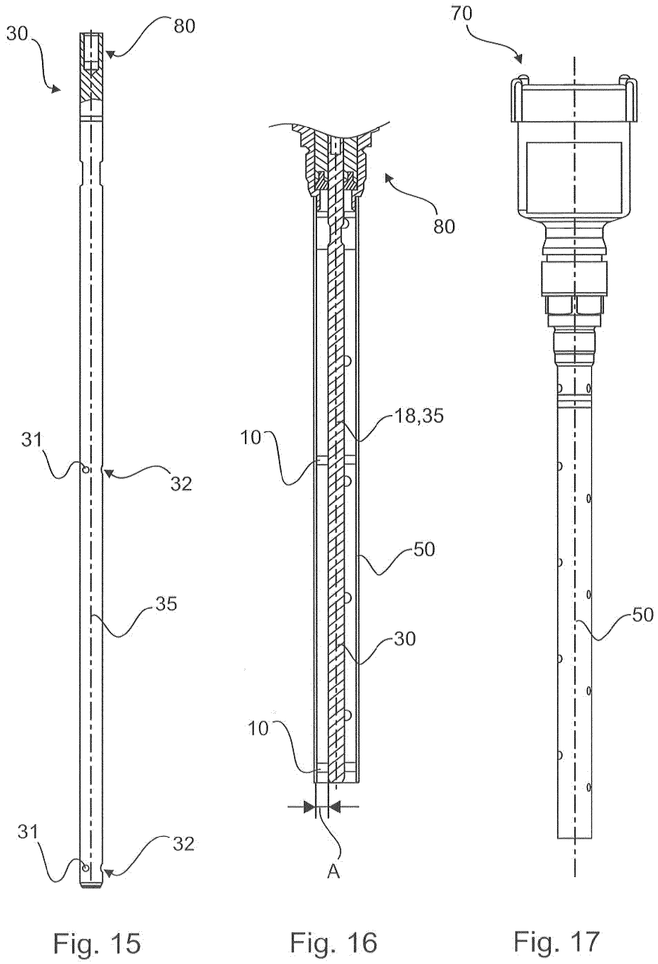

Fig. 15 zeigt eine Seitenansicht eines stabförmigen Innenleiters 30. Der stabförmige Innenleiter 30 weist eine Befestigungseinheit 80, beispielsweise eine Schraubverbindung, an einem ersten Ende des stabförmigen Innenleiters 30 auf, über die der stabförmige Innenleiter 30 an einer Messvorrichtung befestigt ist. An dieser Messvorrichtung kann ferner auch der Außenleiter 50 befestigt sein, so dass der stabförmige Innenleiter 30 lediglich über die Messvorrichtung mit dem Außenleiter 50 verbunden ist, da zwischen Abstandhalter 10 und Außenleiter 50 ein kleiner Luftspalt vorgesehen sein kann. Der stabförmige Innenleiter 30 weist ferner eine erste Reihe 32 mit zumindest drei Ausnehmungen 31 entlang einer

Umfangsrichtung 33 des stabförmigen Innenleiters 30 zur Aufnahme jeweils eines Stützelementes 12 eines Abstandhalters 10 auf. Der Abstandhalter 10 ist in Fig. 15 nicht dargestellt. Ebenso ist lediglich eine Ausnehmung 31 der ersten Reihe 32 vollständig dargestellt. Der stabförmige Innenleiter 30 weist ferner eine zweite Reihe 36 mit zumindest drei Ausnehmungen 31 entlang einer Umfangsrichtung 33 des stabförmigen Innenleiters 30 zur Aufnahme jeweils eines Stützelementes 12 eines weiteren nicht in Fig. 15 dargestellten Abstandhalters 10 auf. Ferner ist lediglich eine Ausnehmung 31 der zweiten Reihe 36 von Ausnehmungen 31 vollständig dargestellt. Die zweite Reihe 36 mit zumindest drei Ausnehmungen 31 ist im Bereich eines zweiten Endes des stabförmigen Innenleiters 30 angeordnet. Die erste Reihe 32 mit den zumindest drei Ausnehmungen 31 ist in etwa mittig zwischen der Befestigungseinheit 80 und der zweiten Reihe 36 mit zumindest drei Ausnehmungen 31 auf dem stabförmigen Innenleiter 30 angeordnet.

Fig. 16 zeigt den stabförmigen Innenleiter 30 sowie den Außenleiter 50, wobei der Außenleiter 50 durch genau zwei Abstandhalter 10 von dem stabförmigen Innenleiter 30 in einem Abstand A gehalten wird. Insbesondere sind die Abstandhalter 10 dazu ausgeführt, den stabförmigen Innenleiter 30 im Wesentlichen koaxial zu dem Außenleiter 50 zu halten bzw. zu beabstanden. Ebenfalls in Fig. 16 zu erkennen ist, dass die Rotationsachse 18 des Abstandhalters 10 auf der Rotationsachse 35 des stabförmigen Innenleiters 30 liegt, wenn sich die Füllstandmesssonde in einem zusammengebauten Zustand befindet und der stabförmige Innenleiter 30 und der Außenleiter 50 koaxial zueinander ausgerichtet sind.

Fig. 17 zeigt eine Seitenansicht einer Füllstandmesssonde 70 mit einem Außenleiter 50. In dem Außenleiter 50 können mehrere Bohrungen vorgesehen sein, welche versetzt zueinander angeordnet sind. In Fig. 17 sind der stabförmige Innenleiter 30 sowie die Abstandhalter 10 durch den Außenleiter 50 verdeckt.

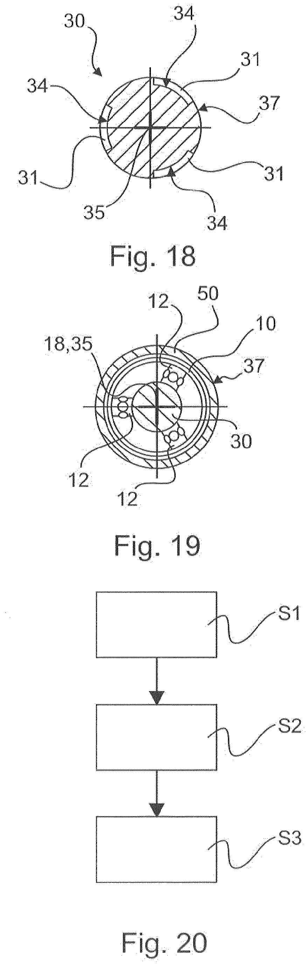

Fig. 18 zeigt eine Schnittansicht eines stabförmigen Innenleiters 30, wobei der stabförmige Innenleiter 30 Ausnehmungen 31, insbesondere Vertiefungen, in der Oberfläche 37 des stabförmigen Innenleiters 30 aufweist. Die Ausnehmungen 31 weisen jeweils eine Grundfläche 34 auf, wobei jede Grundfläche 34 einen Radius aufweist, dessen Mittelpunkt nicht auf der Rotationsachse 35 des stabförmigen Innenleiters 30 liegt. Die Grundflächen 34 der Ausnehmungen 31 sind dazu ausgeführt, die gebogenen Stirnflächen 16 der Stützelemente 12 des Abstandhalters 10 aufzunehmen. Der Abstandhalter 10 ist in Fig. 18 nicht dargestellt.

Fig. 19 zeigt eine Schnittansicht durch einen Außenleiter 50 und einen stabförmigen Innenleiter 30 einer koaxialen Füllstandmesssonde 70 sowie eine Draufsicht auf einen Abstandhalter 10. Die Stützelemente 12 des Abstandhalters 10 greifen in die in Fig. 19 nicht dargestellten Ausnehmungen 31 auf der Oberfläche 37 des stabförmigen Innenleiters 30 ein, um den Außenleiter 50 koaxial zu dem stabförmigen Innenleiter 30 auszurichten bzw. auf Abstand zu halten. Die Rotationsachse 18 des Abstandhalters 10 liegt dabei auf der Rotationsachse 35 des stabförmigen Innenleiters 30.

Fig. 20 zeigt ein Flussdiagramm für ein Montageverfahren zur Montage eines Abstandhalters 10 auf einem stabförmigen Innenleiter 30. In einem Schritt S1 des Verfahrens erfolgt ein Vorspannen des Abstandhalters 10, so dass die Stützelemente 12 des ringförmigen Elements 11 über einer Oberfläche 37 des stabförmigen Innenleiters 30 entlang einer Rotationsachse 35 des stabförmigen Innenleiters 30 führbar sind. In einem weiteren Schritt S2 des Verfahrens erfolgt ein Positionieren des Abstandhalters 10 in Bezug zu dem stabförmigen Innenleiter 30. Dabei wird der Abstandhalter 10 über dem stabförmigen Innenleiter 30 geführt bzw. auf den stabförmigen Innenleiter 30 aufgeschoben und über den Ausnehmungen 31 des stabförmigen Innenleiters 30 positioniert. In einem weiteren Schritt S3 des Verfahrens erfolgt ein Entspannen des Abstandhalters 10, so dass die Stützelemente 12 des ringförmigen Elements 11 in korrespondierende Ausnehmungen 31 des stabförmigen Innenleiters 30 eingreifen.

Ergänzend ist darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Abstandhalter (10) zum Halten eines Abstandes (A) zwischen einem stabförmigen Innenleiter (30) und einem Außenleiter (50) einer Füllstand-Messsonde (70), aufweisend:
ein ringförmiges Element (11);
zumindest drei Stützelemente (12), welche jeweils in einer radialen Richtung (13) aus einer Innenfläche (14) des ringförmigen Elementes (11) herausragen; wobei
jedes der drei Stützelemente (12) an einem der Innenfläche (14) abgewandten Ende (15) eine gebogene Stirnfläche (16) aufweist und wobei
das der Innenfläche (14) abgewandte Ende (15) zum Eingriff in eine Ausnehmung (31) des stabförmigen Innenleiters (30) ausgeführt ist;
**dadurch gekennzeichnet, dass**
die zumindest drei Stützelemente (12) jeweils eine Bohrung (19) aufweisen und dass
die Bohrungsachsen der durch die Stützelemente (12) verlaufenden Bohrungen (19) jeweils gegenüber einer Rotationsachse (18) des ringförmigen Elementes (11) geneigt angeordnet sind.

2. Abstandhalter (10) nach Anspruch 1,
wobei sich die zumindest drei Stützelemente (12) in radialer Richtung (13) verjüngen.

3. Abstandhalter (10) nach einem der vorhergehenden Ansprüche,
wobei die zumindest drei Stützelemente (12) in regelmäßigen Abständen entlang einer Umfangsrichtung (17) des ringförmigen Elements (11) angeordnet sind.

4. Abstandhalter (10) nach einem der vorhergehenden Ansprüche,
wobei die gebogene Stirnfläche (16) des jeweiligen Stützelementes (12) einen Radius aufweist, dessen Mittelpunkt nicht auf einer Rotationsachse (18) des ringförmigen Elementes (11) liegt.

5. Abstandhalter (10) nach einem der vorhergehenden Ansprüche,
wobei sich die jeweiligen Bohrungsachsen der durch die Stützelemente (12) verlaufenden Bohrungen (19) in einem gemeinsamen Punkt schneiden, welcher auf der Rotationsachse (18) des ringförmigen Elementes (11) liegt.

6. Abstandhalter (10) nach einem der vorhergehenden Ansprüche,
wobei der Abstandhalter (10) aus einem Kunststoffmaterial gefertigt ist.

7. Stabförmiger Innenleiter (30) einer Messsonde (70), aufweisend:
eine erste Reihe (32) mit zumindest drei Ausnehmungen (31) entlang einer Umfangsrichtung (33) des stabförmigen Innenleiters (30) zur Aufnahme jeweils eines Stützelementes (12) eines Abstandhalters (10);
**dadurch gekennzeichnet, dass**
die Ausnehmungen (31) jeweils eine gebogene Grundfläche (34) mit einem Radius aufweisen, dessen Mittelpunkt nicht auf einer Rotationsachse (35) des stabförmigen Innenleiters (30) liegt;
die Ausnehmungen (31) als Sacklochbohrungen vorgesehen sind; und
der Radius der gebogenen Grundfläche dem Radius der Oberfläche des Stabförmigen Innenleiters (30) entspricht.

8. Stabförmiger Innenleiter (30) nach Anspruch 7,
wobei die gebogene Grundfläche (34) der Ausnehmungen (31) einfach gekrümmt ist und eine Rotationsachse der einfach gekrümmten Grundfläche (34) und die Rotationsachse (35) des stabförmigen Innenleiters (30) zueinander beabstandet sind.

9. Stabförmiger Innenleiter (30) nach einem der Ansprüche 7 oder 8, aufweisend:
eine zweite Reihe (36) mit zumindest drei Ausnehmungen (31) entlang einer Umfangsrichtung (33) des stabförmigen Innenleiters (30) zur Aufnahme jeweils eines Stützelementes (12) eines Abstandhalters (10);
wobei die zweite Reihe (36) mit den zumindest drei Ausnehmungen (31) und die erste Reihe (32) mit den zumindest drei Ausnehmungen (31) entlang einer Rotationsachse (35) des stabförmigen Innenleiters (30) voneinander beabstandet sind.

10. Messsonde (70) zur Ermittlung eines Füllstandes eines in einem Behälter befindlichen Mediums, aufweisend:
zumindest einen Abstandhalter (10) nach einem der Ansprüche 1 bis 6;
einen stabförmigen Innenleiter (30) mit zumindest drei Ausnehmungen (31) entlang einer Umfangsrichtung (33) des stabförmigen Innenleiters (30),
einen Außenleiter (50);
wobei der Abstandhalter (10) dazu ausgeführt ist, durch Eingriff der Stützelemente (12) in die Ausnehmungen (31) des stabförmigen Innenleiters (30) den Außenleiter (50) und den stabförmigen Innenleiter (30) im Wesentlichen koaxial zueinander zu halten.

11. Messsonde (70) nach Anspruch 10, aufweisend:
wobei der stabförmige Innenleiter (30) und der Außenleiter (50) mittels zwei, entlang einer Rotationsachse (35) des stabförmigen Innenleiters (30) zueinander beabstandeten Abstandhaltern (10) im Wesentlichen koaxial zueinander ausgerichtet sind.

12. Messsonde (70) nach einem der Ansprüche 10 oder 11,
wobei das ringförmige Element (11) des Abstandhalters (10) eine zylinderförmige Außenfläche (20) aufweist; und
wobei zwischen der zylinderförmigen Außenfläche (20) des ringförmigen Elements (11) und einer Innenfläche (51) des Außenleiters (50) ein Luftspalt vorgesehen ist.

13. Montageverfahren zur Montage eines Abstandhalters (10) nach einem der Ansprüche 1 bis 7 auf einem stabförmigen Innenleiter (30), aufweisend die Schritte:
Aufdehnen des Abstandhalters (10), so dass die Stützelemente (12) des ringförmigen Elements (11) über einer Oberfläche (37) des stabförmigen Innenleiters (30) entlang einer Rotationsachse (35) des stabförmigen Innenleiters (30) führbar sind (S1);
Positionieren des Abstandhalters (10) in Bezug zu dem stabförmigen Innenleiter (30, S2);
Entspannen des Abstandhalters (10), so dass die Stützelemente (12) des ringförmigen Elements (11) in korrespondierende Ausnehmungen (31) des stabförmigen Innenleiters (30) eingreifen (S3).

## Claims

1. Spacer (10) for maintaining a distance (A) between a rod-shaped inner conductor (30) and an external conductor (50) of a fill level measuring probe (70), comprising:
an annular element (11);
at least three support elements (12) each projecting in a radial direction (13) from an inner surface (14) of the annular member (11);
wherein each of the three support elements (12) has a curved end face (16) at an end (15) facing away from the inner surface (14); and
wherein the end (15) facing away from the inner surface (14) is configured to engage in a recess (31) of the rod-shaped inner conductor (30);
**characterized in that**
the at least three support elements (12) each have a bore (19); and
**in that** the bore axes of the bores (19) extending through the support elements (12) are each inclined with respect to an axis of rotation (18) of the annular element (11).

2. Spacer (10) according to claim 1,
wherein the at least three support elements (12) taper in the radial direction (13).

3. Spacer (10) according to any one of the preceding claims,
wherein the at least three support elements (12) are arranged at regular intervals along a circumferential direction (17) of the annular member (11).

4. Spacer (10) according to any one of the preceding claims,
wherein the curved end face (16) of the respective support element (12) has a radius, the center of which does not lie on an axis of rotation (18) of the annular element (11).

5. Spacer (10) according to any one of the preceding claims,
wherein the respective bore axes of the bores (19) extending through the support elements (12) intersect at a common point which lies on the axis of rotation (18) of the annular element (11).

6. Spacer (10) according to any one of the preceding claims,
wherein the spacer (10) is made of a plastic material.

7. Rod-shaped inner conductor (30) of a measuring probe (70), having:
a first row (32) with at least three recesses (31) along a circumferential direction (33) of the rod-shaped inner conductor (30) each for receiving a support element (12) of a spacer (10);
**characterized in that**
the recesses (31) each have a curved base surface (34) with a radius, the center of which does not lie on an axis of rotation (35) of the rod-shaped inner conductor (30);
the recesses (31) are provided as blind holes; and
the radius of the curved base surface corresponds to the radius of the surface of the rod-shaped inner conductor (30).

8. Rod-shaped inner conductor (30) according to claim 7,
wherein the curved base surface (34) of the recesses (31) is simply curved and an axis of rotation of the simply curved base surface (34) and the axis of rotation (35) of the rod-shaped inner conductor (30) are spaced apart from each other.

9. Rod-shaped inner conductor (30) according to one of claims 7 or 8, comprising:
a second row (36) with at least three recesses (31) along a circumferential direction (33) of the rod-shaped inner conductor (30) each for receiving a supporting element (12) of a spacer (10);
wherein the second row (36) with the at least three recesses (31) and the first row (32) with the at least three recesses (31) are spaced apart from one another along an axis of rotation (35) of the rod-shaped inner conductor (30).

10. Measuring probe (70) for determining a fill level of a medium in a container, comprising:
at least one spacer (10) according to any one of claims 1 to 6;
a rod-shaped inner conductor (30) having at least three recesses (31) along a circumferential direction (33) of the rod-shaped inner conductor (30),
an external conductor (50);
wherein the spacer (10) is configured to hold the external conductor (50) and the rod-shaped inner conductor (30) substantially coaxially with each other by engagement of the support elements (12) in the recesses (31) of the rod-shaped inner conductor (30).

11. Measuring probe (70) according to claim 10, comprising:
wherein the rod-shaped inner conductor (30) and the external conductor (50) are aligned substantially coaxially with respect to each other by means of two spacers (10) spaced apart along an axis of rotation (35) of the rod-shaped inner conductor (30).

12. Measuring probe (70) according to any one of claims 10 or 11,
wherein the annular member (11) of the spacer (10) has a cylindrical external surface (20); and
wherein an air gap is provided between the cylindrical outer surface (20) of the annular member (11) and an inner surface (51) of the external conductor (50).

13. Mounting method for mounting a spacer (10) according to any one of claims 1 to 7 on a rod-shaped inner conductor (30), comprising the steps:
stretching the spacer (10) so that the support elements (12) of the annular element (11) can be guided (S1) over a surface (37) of the rod-shaped inner conductor (30) along an axis of rotation (35) of the rod-shaped inner conductor (30);
positioning the spacer (10) with respect to the rod-shaped inner conductor (30, S2);
relaxing the spacer (10) so that the support elements (12) of the annular element (11) engage (S3) in corresponding recesses (31) of the rod-shaped inner conductor (30).

## Revendications

1. Écarteur (10) pour maintenir un écart (A) entre un conducteur interne en forme de tige (30) et un conducteur externe (50) d'une sonde de mesure de niveau de remplissage (70), comprenant :
un élément annulaire (11) ;
au moins trois éléments de support (12) faisant chacun saillie dans une direction radiale (13) à partir d'une surface intérieure (14) de l'élément annulaire (11) ;
chacun des trois éléments de support (12) possédant une face d'extrémité (16) incurvée à une extrémité (15) éloignée de la surface intérieure (14) ; et
l'extrémité (15) étant opposée à la surface intérieure (14) est conçue pour s'engager dans un évidement (31) du conducteur interne en forme de tige (30) ;
**caractérisé en ce que**
les au moins trois éléments de support (12) ont chacun un perçage (19) ; et
les axes des perçages (19) traversant les éléments de support (12) sont chacun inclinés par rapport à un axe de rotation (18) de l'élément annulaire (11).

2. Écarteur (10) selon la revendication 1,
dans lequel les au moins trois éléments de support (12) se rétrécissent dans la direction radiale (13).

3. Écarteur (10) selon l'une quelconque des revendications précédentes,
dans lequel les au moins trois éléments de support (12) sont disposés à intervalles réguliers le long d'une direction circonférentielle (17) de l'élément annulaire (11).

4. Écarteur (10) selon l'une quelconque des revendications précédentes,
dans lequel la face d'extrémité (16) incurvée de l'élément de support (12) respectif présente un rayon dont le centre ne se trouve pas sur un axe de rotation (18) de l'élément annulaire (11).

5. Écarteur (10) selon l'une quelconque des revendications précédentes,
dans lequel les axes respectifs des perçage (19) traversant les éléments de support (12) se croisent en un point commun qui se trouve sur l'axe de rotation (18) de l'élément annulaire (11).

6. Écarteur (10) selon l'une quelconque des revendications précédentes,
dans lequel l'écarteur (10) est en matière plastique.

7. Conducteur interne en forme de tige (30) d'une sonde de mesure (70), comprenant :
une première rangée (32) avec au moins trois évidements (31) le long d'une direction circonférentielle (33) du conducteur interne (30) en forme de tige pour recevoir dans chaque cas un élément de support (12) d'un écarteur (10) ;
**caractérisé en ce que**
les évidements (31) comprennent chacun une surface de base (34) incurvée avec un rayon, dont le centre ne se trouve pas sur un axe de rotation (35) du conducteur interne (30) en forme de tige
les évidements (31) sont prévus comme des trous borgnes ; et
le rayon de la surface de base incurvée correspond au rayon de la surface du conducteur interne en forme de tige (30).

8. Conducteur interne en forme de tige (30) selon la revendication 7,
dans lequel la surface de base incurvée (34) des évidements (31) est simplement incurvée et un axe de rotation de la surface de base simplement incurvée (34) et l'axe de rotation (35) du conducteur interne en forme de tige (30) sont espacés l'un de l'autre.

9. Conducteur interne en forme de tige (30) selon l'une des revendications 7 ou 8, comprenant :
une deuxième rangée (36) avec au moins trois évidements (31) le long d'une direction circonférentielle (33) du conducteur interne en forme de tige (30) pour recevoir dans chaque cas un élément de support (12) d'un écarteur (10) ;
dans lequel la deuxième rangée (36) avec les au moins trois évidements (31) et la première rangée (32) avec les au moins trois évidements (31) sont espacées l'une de l'autre le long d'un axe de rotation (35) du conducteur interne en forme de tige (30).

10. Sonde de mesure (70) pour déterminer un niveau de remplissage d'un milieu situé dans un contenant, comprenant :
au moins un écarteur (10) selon l'une des revendications 1 à 6 ;
un conducteur interne en forme de tige (30) ayant au moins trois évidements (31) le long d'une direction circonférentielle (33) du conducteur interne en forme de tige (30),
un conducteur externe (50) ;
dans lequel l'écarteur (10) est configuré pour maintenir le conducteur externe (50) et le conducteur interne en forme de tige (30) sensiblement coaxiale l'un par rapport à l'autre par engagement des éléments de support (12) dans les évidements (31) du conducteur interne en forme de tige (30).

11. Sonde de mesure (70) selon la revendication 10, comprenant :
dans lequel le conducteur intérieur en forme de tige (30) et le conducteur extérieur (50) sont alignés de manière sensiblement coaxiale l'un par rapport à l'autre au moyen de deux entretoises (10) espacées le long d'un axe de rotation (35) du conducteur intérieur en forme de tige (30).

12. Sonde de mesure (70) selon l'une des revendications 10 ou 11,
dans lequel l'élément annulaire (11) de l'écarteur (10) comprend une surface extérieure cylindrique (20) ;
dans lequel un espace d'air est prévu entre la surface extérieure cylindrique (20) de l'élément annulaire (11) et une surface intérieure (51) du conducteur externe (5

13. Méthode de montage pour monter un écarteur (10) selon l'une quelconque des revendications 1 à 7 sur un conducteur interne en forme de tige (30), comprenant les étapes suivantes :
étirer l'écarteur (10) de sorte que les éléments de support (12) de l'élément annulaire (11) puissent être guidés sur une surface (37) du conducteur interne en forme de tige (30) le long d'un axe de rotation (35) du conducteur interne en forme de tige (30, S1) ;
positionner l'écarteur (10) par rapport au conducteur interne en forme de tige (30, S2) ;
relâcher l'écarteur (10) de sorte que les éléments de support (12) de l'élément annulaire (11) s'engagent dans des évidements correspondants (31) du conducteur interne en forme de tige (30, S3).
